Europäisches Patentamt

**European Patent Office**

**Office européen des brevets**

(19)

(11) Numéro de publication : **0 204 646**
**B1**

(12) **FASCICULE DE BREVET EUROPÉEN**

(45) Date de publication du fascicule du brevet :
15.03.89

(51) Int. Cl.⁴ : **F 03 B 13/08**

(21) Numéro de dépôt : 86420143.9

(22) Date de dépôt : 02.06.86

(54) **Canal d'alimentation en eau d'une turbine KAPLAN à axe vertical.**

(30) Priorité : 03.06.85 FR 8508506

(43) Date de publication de la demande :
10.12.86 Bulletin 86/50

(45) Mention de la délivrance du brevet :
15.03.89 Bulletin 89/11

(84) Etats contractants désignés :
**CH DE FR LI**

(56) Documents cités :
**CH--A--    93 387**
**CH--A--    93 889**
**CH--A--    115 997**
**DE--C--    821 030**
**DE--C--    834 680**
**US--A-- 1 730 578**

(73) Titulaire : **NEYRPIC**
**75 rue du Général Mangin**
**F-38100 Grenoble (FR)**

(72) Inventeur : **Ngo, Phan-Phu**
**Montchaboud**
**F-38220 Vizille (FR)**

(74) Mandataire : **Karmin, Roger et al**
**Cabinet MONNIER 150, cours Lafayette**
**F-69003 Lyon (FR)**

Jouve, 18, rue St-Denis, 75001 Paris, France

## Description

La présente invention est relative à une turbine hydraulique de basse chute du genre Kaplan à axe vertical.

Dans le cas de basses chutes, c'est-à-dire dont les hauteurs sont comprises de manière générale entre quelques mètres et quelques dizaines de mètres, on utilise des turbines Kaplan à axe vertical dont l'alimentation est réalisée au moyen d'une chambre d'eau, c'est-à-dire d'un canal d'amenée à l'air libre ou en charge. On utilise aussi de manière usuelle un distributeur tronconique convergent vers l'aval, c'est-à-dire dans ce cas vers le bas.

Toutefois, les essais sur modèles réduits ont mis en évidence des phénomènes perturbateurs :

C'est ainsi que dans une chambre d'eau du genre conforme à la première partie de la revendication 1 (décrite dans le document CH-C-115 997), il existe des zones d'eau morte qui favorisent le développement des tourbillons apparaissant dans d'autres points de ladite chambre d'eau, mais ces zones d'eau morte peuvent elles-mêmes également donner naissance à des vortex.

En outre, en aval de l'arbre de ladite turbine ou de son fourreau circulaire, il se produit un décollement de l'écoulement de l'eau avec apparition de vortex. Ceux-ci grossissent en entraînant de l'air en dessous de la surface libre de telle sorte que les vortex se transforment en tourbillons aspirants.

Les perfectionnements qui font l'objet de la présente invention visent à remédier aux deux inconvénients précités et à permettre la réalisation d'un canal d'alimentation d'une turbine Kaplan à axe vertical qui d'une part supprime les zones d'eau morte dudit canal, et d'autre part évite la formation de tourbillons aspirants.

A cet effet, les parois latérales verticales du canal d'alimentation établi conformément à l'invention sont orientées de manière convergente en direction du plan vertical de symétrie dudit canal, tandis que des moyens sont prévus dans le canal en amont de la turbine en vue d'empêcher le développement de tourbillons aspirant en aval du fourreau de l'arbre de la turbine, ces moyens étant réalisés sous la forme d'un profilé aérodynamique de section transversale ovoïde situé le long de la partie aval du fourreau de l'arbre de la turbine.

Le dessin annexé, donné à titre d'exemple, permettra de mieux comprendre l'invention, les caractéristiques qu'elle présente et les avantages qu'elle est susceptible de procurer :

Fig. 1 illustre en coupe verticale une turbine Kaplan à axe vertical, alimentée par une chambre d'eau comportant application des perfectionnements suivant l'invention.

Fig. 2 en est une coupe suivant II-II (fig. 1).

Fig. 3 est une vue semblable à celle de fig. 1, mais illustrant une alimentation par un conduit en charge à la place d'une chambre d'eau.

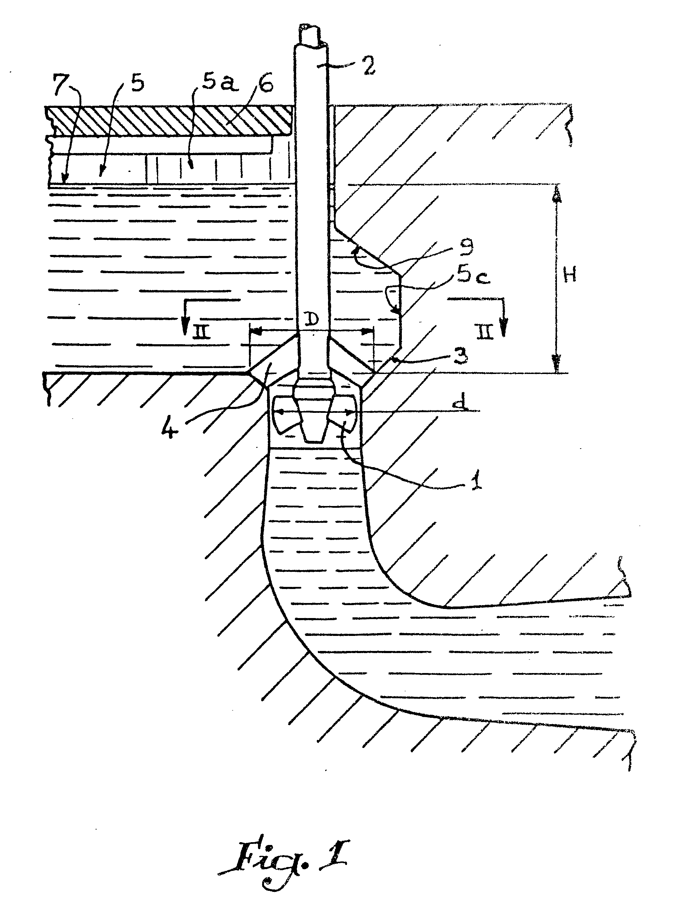

Fig. 1 illustre schématiquement une installation hydraulique pour une turbine Kaplan à axe vertical. On observe que la turbine 1 calée à l'extrémité inférieure d'un arbre vertical monté dans un fourreau 2 est placée en dessous d'un distributeur à paroi tronconique 3 comportant des ailettes directrices 4 reliant la paroi du distributeur au fourreau 2 de l'arbre de la turbine 1.

L'alimentation en eau de la turbine 1 est réalisée au moyen d'un canal 5 à surface libre dont le dessus est fermé par des dalles 6. On observe que la surface libre amont référencée 7 du liquide dans le canal d'amenée se trouve bien en dessous des dalles 6.

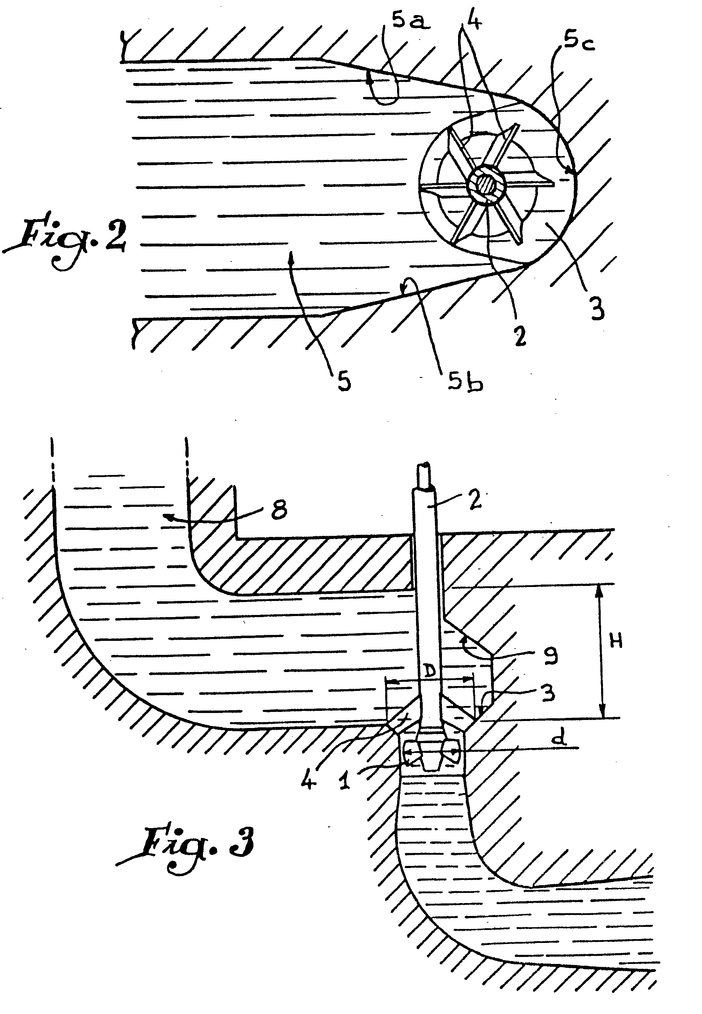

Conformément à l'invention et comme illustré en fig. 2, les parois latérales verticales 5a et 5b du canal 5 sont orientées de manière convergente en direction du plan vertical de symétrie dudit canal, de manière qu'elles viennent se raccorder avec la face extrême arrondie 5c de ce canal, laquelle comporte un diamètre un peu supérieur au diamètre extérieur D des ailettes directrices 4.

Comme indiqué plus haut, les zones d'eau morte des chambres d'eau usuelles favorisent le développement de vortex où sont susceptibles d'en créer elles-mêmes. Au contraire, grâce à leur forme convergente dans la zone de la turbine, les parois 5a, 5b du canal 5 permettent d'éliminer les zones d'eau morte et leurs inconvénients en ce qui concerne les vortex.

Il va de soi que si le canal 5 est un conduit en charge 8 tel que celui illustré en fig. 3, on peut affecter à ses parois latérales verticales situées dans la zone de la turbine des orientations convergentes telles que celles illustrées en fig. 2.

En cas de surface libre, en aval du fourreau 2 de l'arbre de la turbine 1, il se produit un décollement de l'écoulement avec apparition de vortex qui, en grossissant entraînent de l'air situé au-dessus de la surface libre 7 de l'eau du canal 5. Les vortex en question se transforment alors en tourbillons aspirants. Ces tourbillons sont sources de vibrations et d'instabilité de fonctionnement.

Conformément à l'invention, on peut supprimer le décollement de l'écoulement par trois sortes de moyens.

Tout d'abord, on profile le fourreau 2 de l'arbre de ladite turbine de manière à lui conférer en section transversale une forme aérodynamique ovoïde.

On pourrait aussi prévoir un radeau flottant dans le compartiment du canal à l'aval de la turbine. Ce radeau ferait écran entre l'air libre situé au-dessus de la surface 7 de l'eau et cette dernière, de manière à briser les vortex au moment où ils se développent. Toutefois, il est difficile de fixer ce radeau aux parois du canal, surtout lorsque la turbine est équipée d'une vanne de garde amont dont la fermeture peut mettre à sec le canal ou le conduit en question.

Conformément à l'invention, le dispositif choisi pour éliminer les tourbillons aspirants en aval de la turbine est réalisé au moyen d'une paroi fixe 9 inclinée vers le bas, d'amont en aval et située en aval du fourreau 2 de l'arbre de la turbine.

Grâce à l'invention, on peut ainsi diminuer très sensiblement la hauteur H de la surface libre de l'eau 7 dans le canal 5 qui peut être limitée à environ 1,4d (d = diamètre de la turbine 1), alors que sans les dispositifs suivant l'invention, la hauteur minimale doit être environ 2d. Ceci est particulièrement intéressant soit qu'on utilise un canal à surface libre, soit qu'on utilise un conduit sous pression 8, puisqu'on peut ainsi réduire d'environ 30 % la dimension de ce conduit d'amenée.

## Revendications

1. Canal (5) d'alimentation en eau d'une turbine Kaplan (1) à arbre vertical qui se raccorde avec une face extrême (5c) de forme arrondie ou à pans coupés dont le contour est un peu supérieur à la circonférence circonscrite au distributeur tronconique usuel (4) situé en amont de la turbine, caractérisé en ce que ses parois latérales verticales (5a, 5b) sont au droit de la turbine orientées de manière convergente en direction du plan vertical de symétrie dudit canal (5), et en ce que en amont de la turbine en vue d'empêcher le développement de tourbillons aspirant en aval du fourreau de l'arbre de la turbine, le fourreau est réalisé sous la forme d'un profilé aérodynamique de section transversale ovoïde situé le long de sa partie aval.

2. Canal suivant la revendication 1, caractérisé en outre par une paroi (9) inclinée vers le bas d'amont en aval, ménagée dans le canal d'alimentation (5) de la turbine et en aval de l'arbre de cette dernière pour contrecarrer la formation de tourbillons aspirants.

## Claims

1. Water-feeding channel (5) for a Kaplan turbine (1) with a vertical shaft, which is connected to an end face (5c) of rounded or bevelled shape, whereof the outline is slightly greater than the circumference circumscribing the conventional frustoconical distributor (4) located upstream of the turbine, characterized in that its vertical side walls (5a, 5b) are at right angles to the turbine and are oriented converging in the direction of the vertical plane of symmetry of the said channel (5), and in that, upstream of the turbine, in order to prevent the generation of vortices sucking downstream of the sleeve of the turbine shaft, the sleeve is made in the form of an aerodynamic section of ovoid cross-section located along its downstream part.

2. Channel according to claim 1, furthermore characterized by a wall (9) which is inclined downward in the downstream direction and is made in the feeding channel (5) of the turbine and downstream of the shaft of the latter in order to prevent the formation of suction vortices.

## Patentansprüche

1. Wasserzulaufkanal (5) für eine Kaplan-Turbine (1) mit senkrechter Achse, der sich mit einer abgerundeten oder abgestumpfte Ecken aufweisenden Fläche (5c) zusammenschließt, deren Umfang etwas größer ist als die umbeschriebene Peripherie des üblichen kegelstumpfförmigen, oberhalb der Turbine liegenden Verteilers (4), dadurch gekennzeichnet, daß die senkrechten Kanalseitenwände (5a, 5b) in der Nähe der Turbine in Richtung der senkrechten Symmetrieebene des Kanals (5) konvergierend verlaufen und daß oberhalb der Turbine zur Verhinderung der Entstehung von Saugwirbeln stromabwärts der Hülse der Turbinenachse diese Hülse längs ihres unteren Teils in Form eines aerodynamischen Profils mit eiförmigem Querschnitt ausgebildet ist.

2. Kanal nach Anspruch 1, gekennzeichnet durch eine Wand (9), die in Strömungsrichtung gesehen von oben nach unten geneigt im Zulaufkanal (5) der Turbine stromabwärts von deren Achse vorgesehen ist und der Bildung von Saugwirbeln entgegenwirkt.

Fig. 1

*Fig. 2*

*Fig. 3*